# EUROPEAN PATENT SPECIFICATION

(11) **EP 4 178 188 B1**
(45) Date of publication and mention of the grant of the patent: **13.05.2026**
(21) Application number: 21881845.8
(22) Date of filing: 28.09.2021
(51) Int. Cl.: H04M 1/725, G06F 3/0482

(54) **LANDSCAPE INTERACTION METHOD AND APPARATUS, ELECTRONIC DEVICE, AND STORAGE MEDIUM**
LANDSCHAFTSINTERAKTIONSVERFAHREN UND -VORRICHTUNG, ELEKTRONISCHE VORRICHTUNG UND SPEICHERMEDIUM
PROCÉDÉ ET APPAREIL D'INTERACTION DE PAYSAGE, DISPOSITIF ÉLECTRONIQUE ET SUPPORT DE STOCKAGE

(30) Priority: 21.10.2020 CN 202011133640
(43) Date of publication of application: 10.05.2023
(73) Proprietor: Beijing Zitiao Network Technology Co., Ltd., Beijing 100190 (CN)
(72) Inventor: ZHENG, Qifan, Beijing 100190 (CN); RUAN, Wentao, Beijing 100190 (CN)
(74) Representative: Marks & Clerk LLP
(86) International application number: PCT/CN2021/121186
(87) International publication number: WO 2022/083427

(56) References cited:
- CN-A- 109 120 981
- CN-A- 109 600 656
- CN-A- 110 673 774
- CN-A- 112 261 226
- US-A1- 2009 024 923

## Description

### TECHNICAL FIELD

Embodiments of the present disclosure relate to the field of computer technology, for example, a landscape interaction method, an electronic device, and a storage medium.

### BACKGROUND

Currently, software installed in an electronic device and having a video playback function generally supports the landscape playback of videos.

During the landscape playback of a video, a user who desires to view other videos published by a video author of the currently viewed video needs to click on a corresponding control in a landscape playback page. Accordingly, in response to monitoring the click operation of the user, a computer device switches a currently displayed page from the landscape playback page to a portrait playback page and further switches the currently displayed page from the portrait playback page to a personal homepage of the video author so that the user can view, in the personal homepage, the videos published by the video author.

However, the video viewing manner in the related art requires two page switches, which is cumbersome to operate and unfavorable for the user to view a video. Further relevant technologies are also known from CN 109 120 981 A (BEIJING DAJIA INTERCONNECTION INFORMATION TECHNOLOGY CO., LTD.) 1 January 2019 (2019-01-01) which relates to an information list display method and device and storage medium.

### SUMMARY

The invention is defined by the claims. Embodiments of the present disclosure provide a landscape interaction method, an electronic device, and a storage medium, so as to simplify operations required for viewing other videos of a video author. Further improvements are provided in the dependent claims.

Also provided is a landscape interaction method. The method includes the steps below.

A first trigger operation acting on a first display area of a landscape playback page is received, where the first display area includes a display area of author information of a current video author, and the current video author is a publisher of a first target video in the landscape playback page.

**In** response to the first trigger operation, a target-video list of the current video author is displayed in a second display area of the landscape playback page, where the target-video list includes at least one video item of at least one target video published by the current video author.

**In** response to the first trigger operation, a viewing control is displayed in the landscape playback page; and in response to receiving a second trigger operation acting on the viewing control, a currently displayed page is switched from the landscape playback page to a personal homepage of the current video author to present, through the personal homepage, videos published by the current video author.

Before the target-video list of the current video author is displayed in the second display area of the landscape playback page, the method further comprises: at least one landscape video published by the current video author is acquired as the at least one target video, where a video-frame width of the landscape video is greater than a video-frame height of the landscape video

Also provided is an electronic device. The electronic device includes one or more processors and a memory.

The memory is configured to store one or more programs.

The one or more programs, when executed by the one or more processors, cause the one or more processors to perform the landscape interaction method according to the embodiments of the present disclosure.

Also provided is a computer-readable storage medium, which is configured to store a computer program which, when executed by a processor, causes the processor to perform the landscape interaction method according to the embodiments of the present disclosure.

### BRIEF DESCRIPTION OF DRAWINGS

The same or similar reference numerals throughout the drawings denote the same or similar elements. It is to be understood that the drawings are illustrative and that originals and elements are not necessarily drawn to scale.
FIG. 1 is a flowchart of a landscape interaction method according to an embodiment of the present disclosure.
FIG. 2 is a schematic diagram of a landscape playback page according to an embodiment of the present disclosure.
FIG. 3 is a schematic diagram of a target-video list according to an embodiment of the present disclosure.
FIG. 4 is a schematic diagram of another target-video list according to an embodiment of the present disclosure.
FIG. 5 is a schematic diagram of a third target-video list according to an embodiment of the present disclosure.
FIG. 6 is a schematic diagram of video item loading according to an embodiment of the present disclosure.
FIG. 7 is a flowchart of another landscape interaction method according to an embodiment of the present disclosure.
FIG. 8 is a schematic diagram of another video item loading according to an embodiment of the present disclosure.
FIG. 9 is a block diagram of a landscape interaction apparatus according to an embodiment of the present disclosure.
FIG. 10 is a structural diagram of an electronic device according to an embodiment of the present disclosure.

### DETAILED DESCRIPTION

Embodiments of the present disclosure are described in more detail hereinafter with reference to the drawings. The drawings illustrate some embodiments of the present disclosure, but it is to be understood that the present disclosure may be implemented in various forms and is not limited to the embodiments set forth herein. These embodiments are provided for understanding the present disclosure more thoroughly and completely. It is to be understood that the drawings and embodiments of the present disclosure are illustrative and are not intended to limit the scope of the present disclosure.

It is to be understood that steps described in method embodiments of the present disclosure may be performed in sequence and/or in parallel. Additionally, the method embodiments may include additional steps and/or omit the steps shown. The scope of the present disclosure is not limited in this respect.

The term "includes" or its variant used herein means "includes, but is not limited to". The term "based on" means "at least partially based on". The term "an embodiment" means "at least one embodiment". The term "another embodiment" means "at least one other embodiment". The term "some embodiments" means "at least some embodiments". Related definitions of other terms are given in the description hereinafter.

It is to be noted that concepts such as "first" and "second" in the present disclosure are intended to distinguish between different apparatuses, modules, or units and are not intended to limit the order of or interdependence between functions implemented by these apparatuses, modules, or units.

It is to be noted that "one" or "multiple" in the present disclosure is illustrative and non-limiting and that those skilled in the art should understand that "one" or "multiple" is interpreted as "one or more" unless otherwise specified in the context.

The names of messages or information exchanged between apparatuses in embodiments of the present disclosure are illustrative and not to limit the scope of the messages or information.

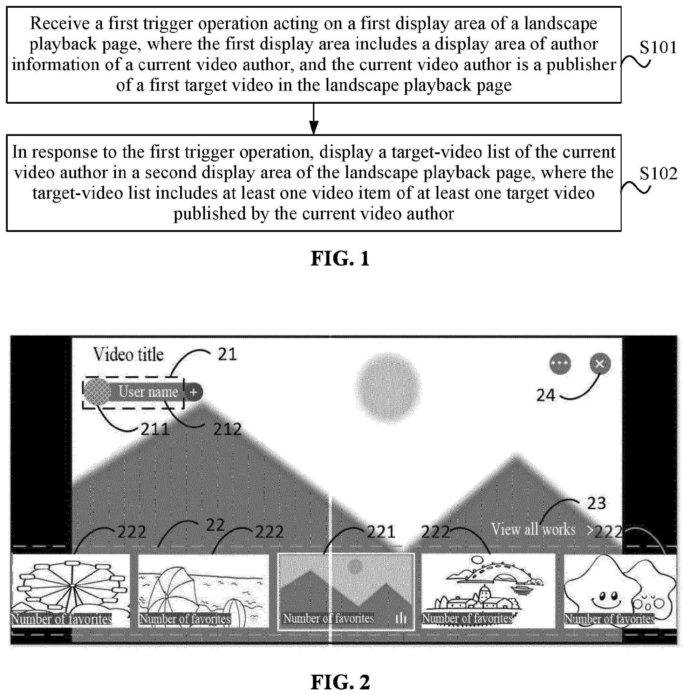

FIG. 1 is a flowchart of a landscape interaction method according to an embodiment of the present disclosure. The method may be performed by a landscape interaction apparatus. The apparatus may be implemented by software and/or hardware and may be configured in an electronic device. Typically, the apparatus may be configured in a smartphone or a tablet computer. For example, the capturing method provided in the embodiment of the present disclosure is applicable to a scenario where videos published by an author of a current video are viewed during the landscape viewing of the video. As shown in FIG. 1, the landscape interaction method provided in the embodiment may include the steps below.

In S101, a first trigger operation acting on a first display area of a landscape playback page is received, where the first display area includes a display area of author information of a current video author, and the current video author is a publisher of a first target video in the landscape playback page.

The landscape playback page may be understood as a playback page of the electronic device in a landscape mode, where a width of an area for displaying pictures of the played video in the playback page is greater than a height of the area. The first target video is a video to which video frames displayed in the landscape playback page when the first trigger operation is received belong. Correspondingly, the current video author is a video author publishing the first target video. The first trigger operation may be any operation for triggering the display of a target-video list of the current video author in the first display area of the landscape playback page and may act on the first display area of the landscape playback page, such as a click operation or a slide operation acting on the first display area. The first display area may be the display area of the author information of the current video author in the landscape playback page, where the author information may include an avatar and/or a user name of the current video author. It will be appreciated that when a list control only used for instructing the electronic device to display the target-video list is provided in the landscape playback page, a preset display area may further include a display area of the list control. Hereinafter, an example is used in which the first display area is the display area of the avatar and the user name of the current video author and the first trigger operation is the click operation acting on the first display area.

As shown in FIG. 2, the electronic device displays the landscape playback page, presents the first target video in the landscape playback page, and displays an avatar 211 and a user name 212 of the current video author of the first target video in a first display area 21. When a user desires to view the target-video list of the current video author, the user clicks on the avatar 211 and/or the user name 212 of the current video author displayed in the landscape playback page. Accordingly, in response to monitoring the click operation acting on the avatar 211 and/or the user name 212 of the current video author, the electronic device determines that the first trigger operation is received.

In S102, in response to the first trigger operation, the target-video list of the current video author is displayed in a second display area of the landscape playback page, where the target-video list includes at least one video item of at least one target video published by the current video author.

The target-video list is a list for displaying the video item of the target video published by the current video author. The target video may be a video published by the current video author or may be a video published by the current video author and meeting a preset condition. The preset condition may be set as required. For example, the preset condition may be set to be that publishing time is within a preset time range or that an aspect ratio of a video frame is within a preset range, which is not limited in the embodiment. Considering a playback effect of the landscape playback page, for example, the preset condition may be set to be that the aspect ratio of the video frame is greater than a preset threshold. The preset threshold may be set as required to any value greater than or equal to 1, for example, may be set to 1 or 16/9. For example, when the preset threshold is 1, before the target-video list of the current video author is displayed in the second display area of the landscape playback page, the method further includes acquiring a landscape video published by the current video author as the target video, where a video-frame width of the landscape video is greater than a video-frame height of the landscape video. The video item of the target video may be understood as video information of the target video, such as a video cover of the target video and the number of times the target video is added to favorites (also referred to as the number of favorites). The second display area may be a preset area for displaying the target-video list and may be any area of the landscape playback page, such as an upper area, a lower area, a left area, or a right area of the landscape playback page. In the embodiment, for example, the second display area is a lower preset area of the landscape playback page.

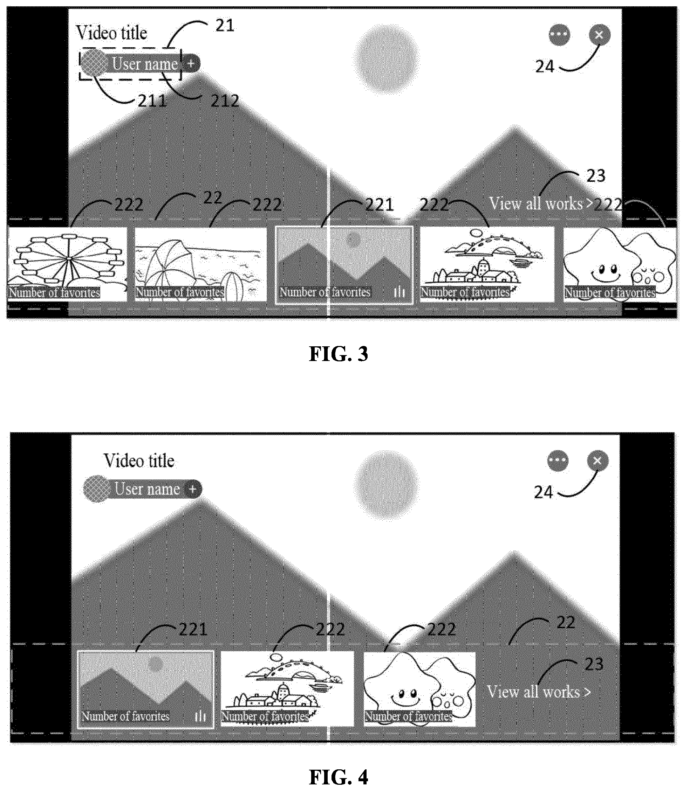

In the embodiment, as shown in FIG. 3, the video item of the target video published by the current video author and displayed in a second display area 22 may be presented in the form of the video cover. The video cover may be a video frame in the video item of the target video or an image selected by the user and may be a static cover or a dynamic cover. The number of times the target video is added to favorites may be further displayed on the video cover. A sequence of video items of target videos in the target-video list may be set as required. For example, the video items of the target videos may be arranged in descending order of the number of times each target video is added to favorites/the number of times each target video is viewed/the number of times each target video is reposted, or the video items of the target videos may be arranged in sequential order of the target videos in a personal homepage of the current video author. The target-video list may include a video item 221 of the first target video and may further include video items 222 of a second target video, where the video item 221 of the first target video may be presented differently from the video items 222 of the second target video. For example, a video cover of the first target video may be presented at different brightness, a different frame may be set for the video cover of the first target video, and/or a playback identifier may be set for the video cover of the first target video.

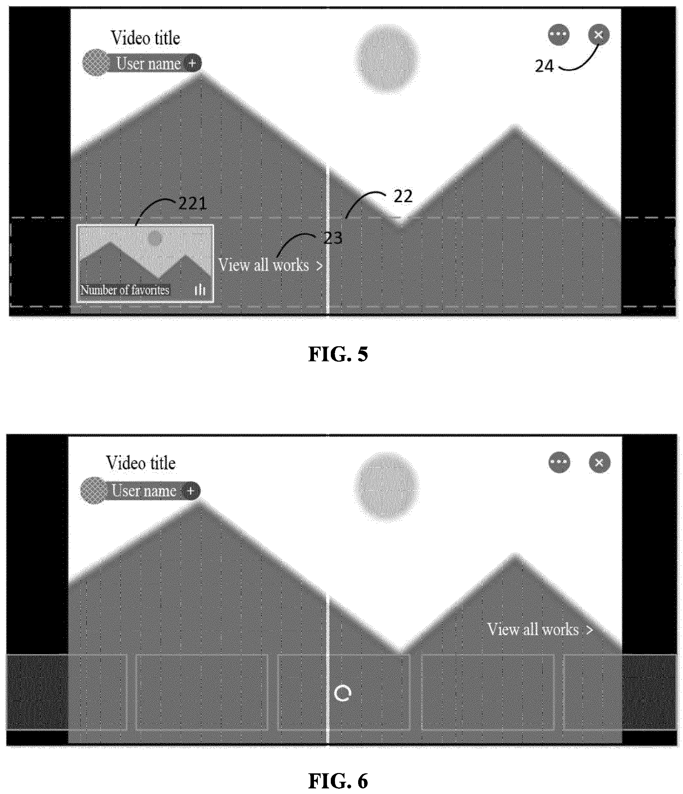

In the embodiment, when the target-video list is displayed, a preset video item in the target-video list may be positioned by default. The preset video item may be the video item of the first target video, a video item of a foremost target video in the target-video list, a video item of a last target video in the target-video list, or a video item of an intermediate target video in the target-video list. For example, the preset video item may be set to be the video item of the first target video so that it is convenient for the user to position the first target video. In this case, the video item of the first target video is displayed, for example, at such a position that relatively many video items of target videos can be displayed in the first display area. For example, video items of five target videos can be displayed in the first display area. When the target-video list is displayed in response to the first trigger operation, if the number of video items preceding the first target video in the target-video list is not less than 2 and the number of video items following the first target video in the target-video list is not less than 2, the video item of the first target video may be displayed at a middle position of the second display area. When the number of video items preceding the video item of the target video in the target-video list is less than 2, the video item of the foremost target video in the target-video list may be displayed on a leftmost side of the second display area and video items following the video item of the foremost target video are displayed in the sequence of the video items in the target-video list, as shown in FIGS. 4 and 5 (where the foremost target video is, for example, the first target video). When the video item of the first target video is a fourth video item in the target-video list and the target-video list includes only 4 or 5 video items, the video item of the first target video may be displayed at a position for displaying the fourth video item in the second display area. When the video item of the first target video is a fifth video item in the target-video list and the target-video list includes only 5 video items, the video item of the first target video may be displayed at a position for displaying the fifth video item in the second display area.

For example, in response to receiving the first trigger operation, the electronic device may select the landscape videos, whose the video-frame widths are greater than the video-frame heights and which are among videos published by the current video author, as the target videos, arranges the video items of the target videos in the order of the target videos in the personal homepage of the current video author to obtain the target-video list, and displays, in the second display area, the video items of the target videos in the target-video list. Being loaded, the video items of the target videos may be presented in the form of a preset placeholder graphic, as shown in FIG. 6. Positions for displaying the video items of the target videos are indicated by placeholder graphics, and after a video item of a certain target video is loaded, a corresponding placeholder graphic of the target video may be replaced with the video item of the target video. Additionally, when video items of one or more target videos fail to be loaded, a loading failure prompt window may be popped up. The loading failure prompt window may be closed in response to monitoring an operation of the user which triggers the closure of the loading failure prompt window, or the loading failure prompt window may be automatically closed after the loading failure prompt window is displayed for a preset time length (such as 3s or 5s).

In an implementation, the landscape interaction method provided in the embodiment may further include: in response to receiving a display stopping trigger operation for stopping displaying the video item of the target video, stopping displaying the target-video list in a preset display area. The display stopping trigger operation may be a click operation on a blank area (that is, an area with no control displayed and except the first display area and the second display area) or the first display area of the landscape playback page. In the embodiment, the electronic device may also stop displaying the target-video list based on the trigger operation of the user. That is, when the user desires to control the electronic device to no longer display the target-video list, the user may click on the blank area or the first display area of the landscape playback page. Accordingly, in response to monitoring the click operation of the user on the blank area or the first display area of the landscape playback page, the electronic device determines that the display stopping trigger operation is received and stops displaying the target-video list in the second display area.

In the landscape interaction method provided in the embodiment, the first trigger operation acting on the first display area for displaying the author information of the current video author of the first target video in the landscape playback page is received, and in response to the first trigger operation, the target-video list including the video item of the target video published by the current video author is displayed in the second display area of the landscape playback page. In the embodiment, by use of the preceding technical solutions, the video item of the target video published by the current video author is directly displayed in the landscape playback page without switches to a portrait playback page and the personal homepage of the current video author so that operations required for viewing the video of the current video author can be simplified. Moreover, since the video item of the target video published by the current video author is directly displayed in the landscape playback page without leaving the landscape playback page, the user can continue viewing the first target video when viewing the video of the current video author, thereby improving the landscape viewing experience of the user.

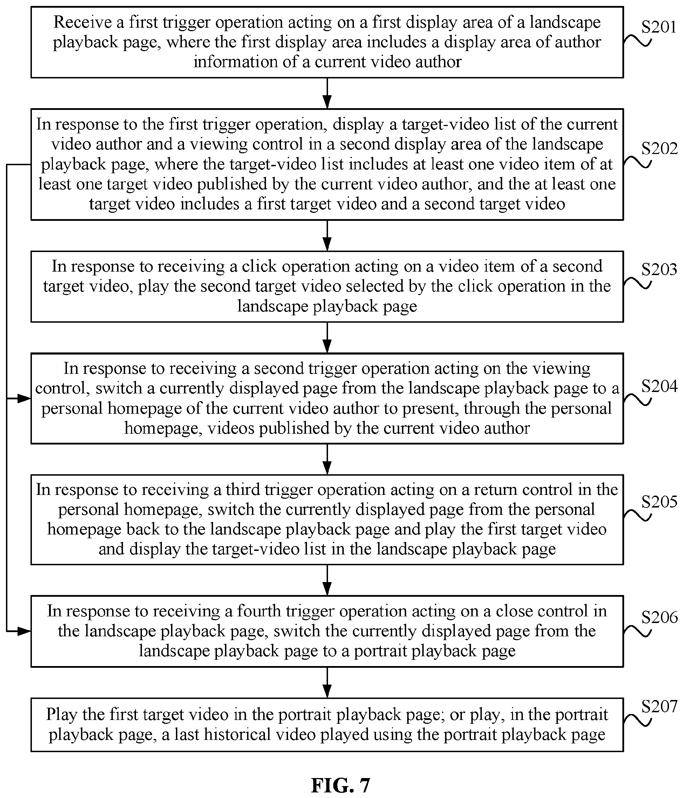

FIG. 7 is a flowchart of another landscape interaction method according to an embodiment of the present disclosure. Solutions in the embodiment may be combined with one or more example solutions in the preceding embodiment. In the embodiment, for example, the at least one target video includes the first target video and the second target video. After the target-video list of the current video author is displayed in the second display area of the landscape playback page, the method further includes: in response to receiving a click operation acting on a video item of a second target video, playing the second target video selected by the click operation in the landscape playback page.

The landscape interaction method provided in the embodiment may further include: in response to the first trigger operation, displaying a viewing control in the landscape playback page; and in response to receiving a second trigger operation acting on the viewing control, switching a currently displayed page from the landscape playback page to the personal homepage of the current video author to present, through the personal homepage, videos published by the current video author.

For example, after the currently displayed page is switched from the landscape playback page to the personal homepage of the current video author, the method further includes: in response to receiving a third trigger operation acting on a return control in the personal homepage, switching the currently displayed page from the personal homepage back to the landscape playback page and playing the first target video and displaying the target-video list in the landscape playback page.

For example, the landscape interaction method provided in the embodiment may further include: in response to receiving a fourth trigger operation acting on a close control in the landscape playback page, switching the currently displayed page from the landscape playback page to the portrait playback page; and playing the first target video in the portrait playback page; or playing, in the portrait playback page, a last historical video played using the portrait playback page.

Accordingly, as shown in FIG. 7, the landscape interaction method provided in the embodiment may include the steps below.

In S201, a first trigger operation acting on a first display area of a landscape playback page is received, where the first display area includes a display area of author information of a current video author, and the current video author is a publisher of a first target video in the landscape playback page.

In S202, in response to the first trigger operation, a target-video list of the current video author and a viewing control are displayed in a second display area of the landscape playback page. Then, S203, S204, or S206 is performed. The target-video list includes at least one video item of at least one target video published by the current video author, and the at least one target video includes the first target video and a second target video.

In the embodiment, referring to FIGS. 3 to 5, while displaying the target-video list of the current video author in the second display area in response to the first trigger operation, an electronic device may also display a viewing control 23 for entering a personal homepage of the current video author in the landscape playback page so that it is convenient for a user to enter the personal homepage of the current video author by triggering the viewing control 23.

A position of the viewing control 23 may be flexibly set. For example, the viewing control 23 may be provided at a fixed position which is not affected by the number of video items of target videos displayed in a second display area 22, such as a position above the first display area, or the viewing control 23 may be provided at a position which varies with the number of video items of target videos displayed in the second display area 22. For example, the second display area 22 can display video items of five target videos. When the video items displayed in the second display area 22 can completely occupy the second display area 22 (that is, five video items are displayed in the second display area 22) or four video items are displayed in the second display area 22, the viewing control 23 may be displayed at a right position above the second display area 22, as shown in FIG. 3. When the number of video items displayed in the second display area 22 is less than or equal to 3, the viewing control 23 may be displayed behind a video item displayed at a rightmost side in the second display area 22, as shown in FIGS. 4 and 5.

**In** S203, in response to receiving a click operation acting on a video item of a second target video, the second target video selected by the click operation is played in the landscape playback page. The operations end.

The second target video may be understood as another target video except the first target video. Correspondingly, the second target video selected by the click operation may be understood as a second target video corresponding to the video item clicked by the click operation.

**In** the embodiment, the electronic device may switch the first target video to a target video selected by the user from the target-video list. For example, the electronic device displays the target-video list of the current video author in the landscape playback page. When the user desires to view a certain target video in the target-video list, the user clicks on a video item of the target video displayed in the landscape playback page. Accordingly, in response to monitoring a click operation acting on a certain video item in the landscape playback page, the electronic device may determine whether the video item is a video item of a second target video. If the video item is the video item of the second target video, the second target video is played in the landscape playback page, that is, the first target video in the landscape playback page is replaced with the second target video. If the video item is not the video item of the second target video, the click operation may not be responded to or the first target video may be replayed.

In this step, when a certain second target video is played, the second target video may be played with an initial position of the second target video as a playback starting point, that is, the second target video is played from a first video frame of the second target video. The second target video may continue being played from a time node to which the second target video was last played, so as to further improve the viewing experience of the user.

In an implementation, when the second target video continues being played from the time node to which the second target video was last played, the step in which the second target video selected by the click operation is played in the landscape playback page includes: updating a first historical playback node of the first target video to a time node to which the first target video is played at a current moment and determining a second historical playback node of the second target video; and continuing to play the second target video selected by the click operation in the landscape playback page with the second historical playback node as the playback starting point.

In the preceding implementation, the first historical playback node is a historical playback node of the first target video, the second historical playback node is a historical playback node of the second target video selected by the click operation, and the historical playback node of a certain target video (including the first target video or the second target video) may be understood as a time node to which the target video is played for the last time. The time node to which the target video is played for the last time may be a time node to which the target video is played when the target video is viewed for the last time by the user after an account login. The time node to which the target video is played for the last time may be a time node to which the target video is played when the target video is viewed for the last time by the user after a landscape playback mode is entered this time. In this case, when the user views a certain target video for the first time in the landscape playback mode, that is, when the electronic device has not recorded a historical playback node of the target video, the electronic device plays the target video from a starting node of the target video. When the user views the target video again in the landscape playback mode, the electronic device continues to play the target video from the time node to which the target video was last viewed. When the user views the target video again after exiting the landscape playback mode, the electronic device replays the target video from the starting node of the target video. Accordingly, after the landscape playback mode is switched to a portrait playback mode based on a trigger operation of the user, the electronic device may empty information about time nodes to which target videos are played and recorded in the landscape playback mode. When switched directly or indirectly from the landscape playback page to a portrait playback page, the electronic device may determine that the user exits the landscape playback mode, that is, current landscape playback ends.

For example, in response to receiving the click operation acting on the video item of the second target video, the electronic device records the time node to which the first target video is currently played as the first historical playback node of the first target video and determines whether a pre-recorded second historical playback node exists for the second target video selected by the click operation. If the pre-recorded second historical playback node exists, the second target video continues being played in the landscape playback page with the second historical playback node of the second target video as the playback starting point. If the pre-recorded second historical playback node does not exist, the second target video is played in the landscape playback page with the starting node of the second target video as the playback starting point.

In the preceding implementation, when playing the second target video selected by the click operation received by the electronic device, the electronic device may or may not display the target-video list of the current video author. That is, in response to receiving a click operation acting on a video item of a certain second target video, the electronic device may play the second target video in the landscape playback page and continue displaying the target-video list of the current video author in the second display area or the electronic device may play the second target video in the landscape playback page and stop displaying the target-video list of the current video author, which is not limited in the embodiment.

In an implementation, the user may also update the video item displayed in the second display area by a slide operation. For example, after the target-video list of the current video author is displayed in the second display area of the landscape playback page, the method may further include: in response to receiving a target slide operation acting on the second display area, controlling the video item displayed in the second display area to move along a sliding direction of the target slide operation to update the video item displayed in the second display area.

The target slide operation may be a slide operation whose sliding direction is the same as an arrangement direction of video items in the second display area. That is, when the video items of the target videos are arranged in a transverse sequence in the second display area, the target slide operation may be a transverse slide operation. When the video items of the target videos are arranged in a longitudinal sequence in the second display area, the target slide operation may be a longitudinal slide operation.

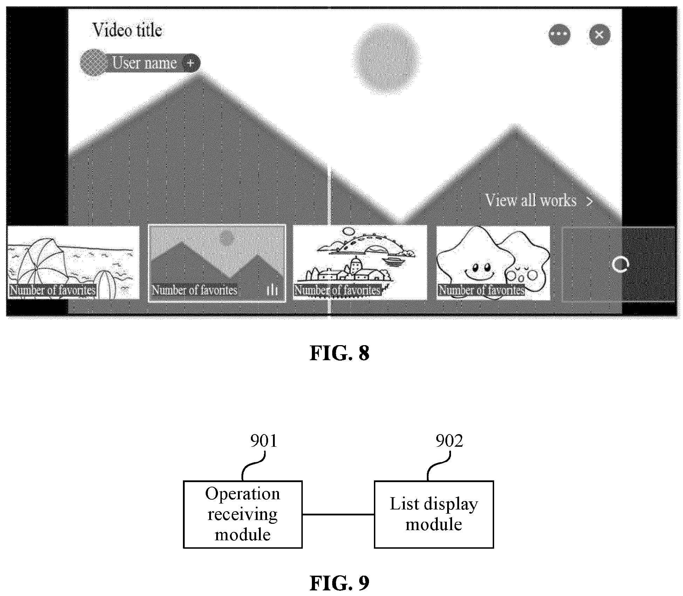

For example, the video items of the target videos are arranged in the transverse sequence in the second display area. When the user desires to update the video item displayed in the second display area, the user may perform a transverse slide in the second display area. Accordingly, in response to monitoring the transverse slide of the user in the second display area, the electronic device determines that the target slide operation is received, controls the video items in the second display area to synchronously move along the sliding direction of the transverse slide operation, and loads and displays a video item on the other side of the loaded video items. That is, when the user slides rightwards, the video items in the second display area are controlled to synchronously move rightwards and another video item on a left side of a video item displayed on a leftmost side is loaded; and when the user slides leftwards, the video items in the second display area are controlled to synchronously move leftwards and another video item on a right side of a video item displayed on a rightmost side is loaded. When the another video item has not been successfully loaded, the another video item may be presented in the form of a placeholder graphic in the second display area, as shown in FIG. 8 (where a video item on a rightmost side of the second display area is, for example, the another video item to be loaded).

When the another video item is being loaded, a video loading prompt window may be popped up to prompt the user.

In S204, in response to receiving a second trigger operation acting on the viewing control, a currently displayed page is switched from the landscape playback page to the personal homepage of the current video author so as to present, through the personal homepage, videos published by the current video author.

The second trigger operation may be used for instructing the electronic device to switch the currently displayed page from the landscape playback page to the personal homepage of the current video author and may be a click operation or a slide operation acting on the viewing control. For example, the second trigger operation is the click operation acting on the viewing control. When the personal homepage of the current video author is switched to, a video cover of the first target video may be presented in the personal homepage in a style different from those of video covers of other videos so that it is convenient for the user to determine the first target video that has just been viewed in the landscape playback page.

For example, in response to receiving the first trigger operation, the electronic device displays the target-video list of the current video author and the viewing control in the landscape playback page. When the user desires to view a video list of all the videos (including the target video and a non-target video) published by the current video author or when the user desires to switch the currently displayed page to the personal homepage of the current video author to view other information (such as developments or favorite videos of the current video author) displayed in the current video author or to trigger a control displayed in the personal homepage, the user may click on the viewing control displayed in the landscape playback page. Accordingly, in response to monitoring the click of the user on the viewing control in the landscape playback page, the electronic device determines that the second trigger operation is received and switches the currently displayed page from the landscape playback page to the personal homepage of the current video author, that is, stops displaying the landscape playback page, stops playing the first target video, and displays the personal homepage of the current video author.

In S205, in response to receiving a third trigger operation acting on a return control in the personal homepage, the currently displayed page is switched from the personal homepage back to the landscape playback page and the first target video is played and the target-video list is displayed in the landscape playback page. The operations end.

The third trigger operation may be used for instructing the electronic device to return the currently displayed page from the personal homepage to a page from which the currently displayed page is switched to the personal homepage. In the embodiment, after the currently displayed page is switched from the landscape playback page to the personal homepage of the current video author, the third trigger operation may be used for instructing the electronic device to switch the currently displayed page from the personal homepage of the current video author back to the landscape playback page. The third trigger operation may be a click operation or a slide operation acting on the return control. For example, the third trigger operation is the click operation acting on the return control.

For example, the electronic device displays the personal homepage of the current video author and displays, in the personal homepage, the videos published by the current video author, the developments of the current video author, and/or the favorite videos of the current video author. When the user desires to return to the landscape playback page to view the video, the user may click on the return control displayed in the personal homepage of the current video author. Accordingly, in response to monitoring the click of the user on the return control in the personal homepage, the electronic device determines that the currently displayed personal homepage is switched to from the landscape playback page, switches the currently displayed page from the personal homepage of the current video author back to the landscape playback page, and restores the landscape playback page to a state when the landscape playback page is switched to the personal homepage of the current video author, that is, continues to play the first target video in the landscape playback page and displays the target-video list of the current video author in the second display area of the landscape playback page.

In S206, in response to receiving a fourth trigger operation acting on a close control in the landscape playback page, the currently displayed page is switched from the landscape playback page to the portrait playback page.

In S207, the first target video is played in the portrait playback page; or a last historical video played using the portrait playback page is played in the portrait playback page.

In the embodiment, the fourth trigger operation may be used for instructing the electronic device to exit from the landscape playback mode, that is, to switch the currently displayed page from the landscape playback page to the portrait playback page. The fourth trigger operation may be a click operation or a slide operation acting on the close control in the landscape playback page. For example, the fourth trigger operation is the click operation acting on the close control in the landscape playback page. The landscape playback mode may be switched to from the portrait playback mode. Correspondingly, the last historical video played using the portrait playback page may be a video displayed in the portrait playback page when the electronic device switches the currently displayed page from the portrait playback page to the landscape playback page.

For example, as shown in FIGS. 2 to 5, the electronic device displays the landscape playback page, displays a close control 24 at a set position of the landscape playback page (for example, an upper right corner of the landscape playback page), and displays the first target video in the landscape playback page. When the user desires to exit the landscape playback mode, the user clicks on the close control 24. Accordingly, in response to monitoring the click of the user on the close control 24 in the landscape playback page, the electronic device determines that the fourth trigger operation is received, and switches the currently displayed page from the landscape playback page to the portrait playback page and plays the first target video in the portrait playback page or switches the currently displayed page from the landscape playback page to the portrait playback page and plays, in the portrait playback page, the last historical video played using the portrait playback page.

The landscape interaction method provided in the embodiment can not only implement switches between the landscape playback mode and the portrait playback mode but also implement video switches based on a video playlist. Moreover, after the landscape playback page is switched to the personal homepage, when the user exits the personal homepage, the landscape playback page can be switched back to instead of being switched to via the portrait playback page and based on a trigger operation of the user so that the user can continue to view the first target video in the landscape playback page and the operations of the user can be further simplified, improving the landscape interaction experience of the user.

FIG. 9 is a block diagram of a landscape interaction apparatus according to an embodiment of the present disclosure. The apparatus may be implemented by software and/or hardware and may be configured in an electronic device. Typically, the apparatus may be configured in a smartphone or a tablet computer. The apparatus may perform a landscape interaction method to perform landscape interaction. As shown in FIG. 9, the landscape interaction apparatus provided in the embodiment may include an operation receiving module 901 and a list display module 902.

The operation receiving module 901 is configured to receive a first trigger operation acting on a first display area of a landscape playback page, where the first display area includes a display area of author information of a current video author, and the current video author is a publisher of a first target video in the landscape playback page.

The list display module 902 is configured to, in response to the first trigger operation, display a target-video list of the current video author in a second display area of the landscape playback page, where the target-video list includes at least one video item of at least one target video published by the current video author.

In the landscape interaction apparatus provided in the embodiment, the operation receiving module receives the first trigger operation acting on the first display area for displaying the author information of the current video author of the first target video in the landscape playback page, and in response to the first trigger operation, the list display module displays the target-video list including the video item of the target video published by the current video author in the second display area of the landscape playback page. In the embodiment, by use of the preceding technical solutions, the video item of the target video published by the current video author is directly displayed in the landscape playback page without switches to a portrait playback page and a personal homepage of the current video author so that operations required for viewing the video of the current video author can be simplified. Moreover, since the video item of the target video published by the current video author is directly displayed in the landscape playback page without leaving the landscape playback page, the user can continue viewing the first target video when viewing the video of the current video author, thereby improving the landscape viewing experience of the user.

For example, the target video includes the first target video and a second target video. The landscape interaction apparatus provided in the embodiment may further include a video playback module. The video playback module is configured to, in response to receiving a click operation acting on a video item of a second target video after the target-video list of the current video author is displayed in the second display area of the landscape playback page, play the second target video selected by the click operation in the landscape playback page.

In the preceding solution, the video playback module may be configured to, in response to receiving the click operation acting on the video item of the second target video, update a first historical playback node of the first target video to a time node to which the first target video is played at a current moment, determine a second historical playback node of the second target video, and continue to play the second target video selected by the click operation in the landscape playback page with the second historical playback node as a playback starting point.

In the preceding solution, the video playback module may be further configured to stop displaying the target-video list in the second display area.

For example, the landscape interaction apparatus provided in the embodiment may further include a control display module and a homepage display module. The control display module is configured to, in response to the first trigger operation, display a viewing control in the landscape playback page. The homepage display module is configured to, in response to receiving a second trigger operation acting on the viewing control, switch a currently displayed page from the landscape playback page to the personal homepage of the current video author to present, through the personal homepage, videos published by the current video author.

For example, the landscape interaction apparatus provided in the embodiment may further include a page return module. The page return module is configured to, in response to receiving a third trigger operation acting on a return control in the personal homepage after the currently displayed page is switched from the landscape playback page to the personal homepage of the current video author, switch the currently displayed page from the personal homepage back to the landscape playback page and play the first target video and display the target-video list in the landscape playback page.

For example, the landscape interaction apparatus provided in the embodiment may further include a video determination module. The video determination module is configured to, before the target-video list of the current video author is displayed in the second display area of the landscape playback page, acquire a landscape video published by the current video author as the target video, where a video-frame width of the landscape video is greater than a video-frame height of the landscape video.

For example, the landscape interaction apparatus provided in the embodiment may further include a portrait switching module and a portrait playback module. The portrait switching module is configured to, in response to receiving a fourth trigger operation acting on a close control in the landscape playback page, switch the currently displayed page from the landscape playback page to the portrait playback page. The portrait playback module is configured to play the first target video in the portrait playback page or play, in the portrait playback page, a last historical video played using the portrait playback page.

The landscape interaction apparatus provided in the embodiment of the present disclosure may perform the landscape interaction method provided in any embodiment of the present disclosure and has function modules and beneficial effects corresponding to the landscape interaction method performed. For technical details not described in detail in the embodiment, reference may be made to the landscape interaction method provided in any embodiment of the present disclosure.

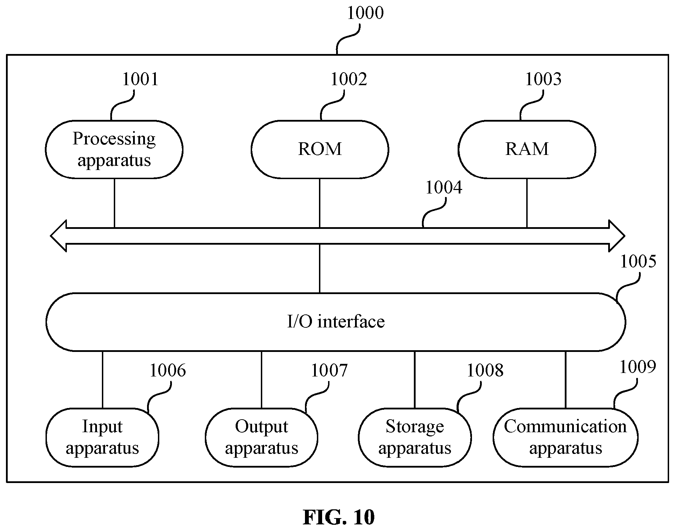

Referring to FIG. 10, FIG. 10 is a structural diagram of an electronic device 1000 (such as a terminal device) suitable for implementing embodiments of the present disclosure. The terminal device in the embodiment of the present disclosure may include, but is not limited to, a mobile terminal such as a mobile phone, a laptop, a digital broadcast receiver, a personal digital assistant (PDA), a portable Android device (PAD), a portable media player (PMP), or an in-vehicle terminal (such as an in-vehicle navigation terminal) or a stationary terminal such as a digital television (TV) or a desktop computer. The electronic device shown in FIG. 10 is an example and is not intended to limit the function and use range of the embodiment of the present disclosure.

As shown in FIG. 10, the electronic device 1000 may include a processing apparatus 1001 (such as a central processing unit or a graphics processing unit). The processing apparatus 1001 may perform various types of appropriate operations and processing according to a program stored in a read-only memory (ROM) 1002 or a program loaded from a storage apparatus 1006 to a random-access memory (RAM) 1003. The RAM 1003 also stores various programs and data required for the operation of the electronic device 1000. The processing apparatus 1001, the ROM 1002, and the RAM 1003 are connected to each other through a bus 1004. An input/output (I/O) interface 1005 is also connected to the bus 1004.

Generally, the following apparatuses may be connected to the I/O interface 1005: an input apparatus 1006 such as a touch screen, a touchpad, a keyboard, a mouse, a camera, a microphone, an accelerometer, or a gyroscope; an output apparatus 1007 such as a liquid crystal display (LCD), a speaker, or a vibrator; the storage apparatus 1006 such as a magnetic tape or a hard disk; and a communication apparatus 1009. The communication apparatus 1009 may allow the electronic device 1000 to perform wireless or wired communication with other devices to exchange data. Although FIG. 10 shows the electronic device 1000 having various apparatuses, it is not required to implement or include all the apparatuses shown. Alternatively, more or fewer apparatuses may be implemented or present.

According to an embodiment of the present disclosure, the process described above with reference to flowcharts may be implemented as a computer software program. For example, a computer program product is included in the embodiment of the present disclosure. The computer program product includes a computer program carried on a non-transitory computer-readable medium. The computer program includes program codes for executing the methods shown in the flowcharts. In such embodiments, the computer program may be downloaded and installed from a network through the communication apparatus 1009, installed from the storage apparatus 1006, or installed from the ROM 1002. When the computer program is executed by the processing apparatus 1001, the preceding functions defined in the methods in embodiments of the present disclosure are implemented.

It is to be noted that the preceding computer-readable medium of the present disclosure may be a computer-readable signal medium or a computer-readable storage medium or any combination thereof. For example, the computer-readable storage medium may be, but is not limited to, an electrical, magnetic, optical, electromagnetic, infrared, or semiconductor system, apparatus, or device or any combination thereof. Concrete examples of the computer-readable storage medium may include, but are not limited to, an electrical connection having one or more wires, a portable computer disk, a hard disk, a RAM, a ROM, an erasable programmable read-only memory (EPROM), a flash memory, an optical fiber, a portable compact disc read-only memory (CD-ROM), an optical memory device, a magnetic memory device, or any suitable combination thereof. The computer-readable storage medium may be a non-transitory computer-readable storage medium.

In the present disclosure, the computer-readable storage medium may be any tangible medium including or storing a program. The program may be used by or used in conjunction with an instruction execution system, apparatus, or device. In the present disclosure, the computer-readable signal medium may include a data signal propagated on a baseband or as part of a carrier, where computer-readable program codes are carried in the data signal. The data signal propagated in this manner may be in multiple forms and includes, but is not limited to, an electromagnetic signal, an optical signal, or any suitable combination thereof. The computer-readable signal medium may also be any computer-readable medium except the computer-readable storage medium. The computer-readable signal medium may send, propagate, or transmit a program used by or used in conjunction with an instruction execution system, apparatus, or device. Program codes included on the computer-readable medium may be transmitted by any suitable medium, including, but not limited to, a wire, an optical cable, a radio frequency (RF), or any suitable combination thereof.

In some embodiments, clients and servers may communicate using any network protocol currently known or developed in the future, such as a Hypertext Transfer Protocol (HTTP), and may be interconnected via any form or medium of digital data communication (for example, a communication network). Examples of the communication network include a local area network (LAN), a wide area network (WAN), an inter-network (for example, the Internet), a peer-to-peer network (for example, an ad hoc network), and any network currently known or developed in the future.

The preceding computer-readable medium may be included in the preceding electronic device or may exist alone without being assembled into the electronic device. The preceding computer-readable medium carries one or more programs, where the one or more programs, when executed by the electronic device, cause the electronic device to receive a first trigger operation acting on a first display area of a landscape playback page, where the first display area includes a display area of author information of a current video author, and the current video author is a publisher of a first target video in the landscape playback page; and in response to the first trigger operation, display a target-video list of the current video author in a second display area of the landscape playback page, where the target-video list includes at least one video item of at least one target video published by the current video author.

Computer program codes for executing operations in the present disclosure may be written in one or more programming languages or a combination thereof. The preceding programming languages include, but are not limited to, an object-oriented programming language such as Java, Smalltalk, or C++ and may also include a conventional procedural programming language such as C or a similar programming language. Program codes may be executed entirely on a user computer, executed partly on a user computer, executed as a stand-alone software package, executed partly on a user computer and partly on a remote computer, or executed entirely on a remote computer or a server. In the case where the remote computer is involved, the remote computer may be connected to the user computer through any type of network including a LAN or a WAN or may be connected to an external computer (for example, through the Internet provided by an Internet service provider).

Flowcharts and block diagrams among the drawings illustrate architectures, functions, and operations possible to implement in accordance with the system, method, and computer program product in embodiments of the present disclosure. In this regard, each block in the flowcharts or block diagrams may represent a module, program segment, or part of codes, where the module, program segment, or part of codes includes one or more executable instructions for implementing specified logical functions. It is to be noted that in some alternative implementations, functions marked in blocks may occur in an order different from that marked in the drawings. For example, two successive blocks may, in fact, be executed substantially in parallel or in reverse order, which depends on the functions involved. It is also to be noted that each block in the block diagrams and/or flowcharts and a combination of blocks in the block diagrams and/or flowcharts may be implemented by a special-purpose hardware-based system executing a specified function or operation or may be implemented by a combination of special-purpose hardware and computer instructions.

The involved units described in the embodiments of the present disclosure may be implemented by software or hardware. The name of a module is not intended to limit the unit itself in some circumstance.

The functions described above herein may be at least partially implemented by one or more hardware logic components. For example, without limitation, example types of hardware logic component that can be used include a field-programmable gate array (FPGA), an application-specific integrated circuit (ASIC), an application-specific standard product (ASSP), a system-on-chip (SoC), a complex programmable logic device (CPLD), and the like.

In the context of the present disclosure, a machine-readable medium may be a tangible medium that may include or store a program used by an instruction execution system, apparatus, or device or used in conjunction with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device or any suitable combination thereof. Concrete examples of the machine-readable storage medium include an electrical connection based on one or more wires, a portable computer disk, a hard disk, a RAM, a ROM, an EPROM, a flash memory, an optical fiber, a portable CD-ROM, an optical storage device, a magnetic storage device, or any suitable combination thereof.

Additionally, although operations are described in a particular order, it is not a must to perform these operations in this particular order or in sequential order. In a certain environment, multitasking and parallel processing may be advantageous. Similarly, although several specific implementation details are included in the preceding discussion, these should not be construed as limiting the scope of the present disclosure. Some features described in the context of separate embodiments may be implemented in combination in a single embodiment. Rather, features described in the context of a single embodiment may be implemented in multiple embodiments individually or in any suitable subcombination.

Although the subject matter is described in language specific to structural features and/or methodological acts, it is to be understood that the subject matter defined in the appended claims is not necessarily limited to the preceding features or acts. Rather, the preceding features and acts are example forms of implementing the claims.

## Claims

1. A landscape interaction method, comprising:
receiving (S101, S201) a first trigger operation acting on a first display area of a landscape playback page, wherein the first display area comprises a display area of author information of a current video author, and the current video author is a publisher of a first target video in the landscape playback page; and
in response to the first trigger operation, displaying (S102, S202) a target-video list of the current video author in a second display area of the landscape playback page, wherein the target-video list comprises at least one video item of at least one target video published by the current video author;
wherein the method further comprises: in response to the first trigger operation, displaying (S202) a viewing control in the landscape playback page; and in response to receiving a second trigger operation acting on the viewing control, switching (S204) a currently displayed page from the landscape playback page to a personal homepage of the current video author to present, through the personal homepage, videos published by the current video author;
wherein before displaying (S102, S202) the target-video list of the current video author in the second display area of the landscape playback page, the method further comprises: acquiring at least one landscape video published by the current video author as the at least one target video, wherein a video-frame width of the landscape video is greater than a video-frame height of the landscape video.

2. The method of claim 1, wherein the at least one target video comprises the first target video and a second target video, and after displaying (S102, S202) the target-video list of the current video author in the second display area of the landscape playback page, the method further comprises:
in response to receiving a click operation acting on a video item of the second target video, playing (S203) the second target video selected by the click operation in the landscape playback page.

3. The method of claim 2, wherein playing (S203) the second target video selected by the click operation in the landscape playback page comprises:
updating a first historical playback node of the first target video to a time node to which the first target video is played at a current moment and determining a second historical playback node of the second target video selected by the click operation; and
continuing to play, in the landscape playback page, the second target video selected by the click operation with the second historical playback node as a playback starting point.

4. The method of claim 2, further comprising:
stopping displaying the target-video list in the second display area.

5. The method of claim 1, after switching (S204) the currently displayed page from the landscape playback page to the personal homepage of the current video author, further comprising:
in response to receiving a third trigger operation acting on a return control in the personal homepage, switching (S205) the currently displayed page from the personal homepage back to the landscape playback page and playing the first target video and displaying the target-video list in the landscape playback page.

6. The method of any one of claims 1 to 5, further comprising:
in response to receiving a fourth trigger operation acting on a close control in the landscape playback page, switching (S206) a currently displayed page from the landscape playback page to a portrait playback page; and
playing (S207) the first target video in the portrait playback page; or playing, in the portrait playback page, a last historical video played using the portrait playback page.

7. An electronic device, comprising:
at least one processor; and
a memory, which is configured to store at least one program;
wherein the at least one program, when executed by the at least one processor, causes the at least one processor to perform the landscape interaction method of any one of claims 1 to 6.

8. A computer-readable storage medium, which is configured to store a computer program, which, when executed by a processor, causes the processor to perform the landscape interaction method of any one of claims 1 to 6.

## Patentansprüche

1. Querformat-Interaktionsverfahren, umfassend:
Empfangen (S101, S201) einer ersten Auslöseoperation, die auf einen ersten Anzeigebereich einer Querformat-Wiedergabeseite wirkt, wobei der erste Anzeigebereich einen Anzeigebereich mit Autoreninformationen eines aktuellen Videoautors umfasst und der aktuelle Videoautor ein Herausgeber eines ersten Zielvideos auf der Querformat-Wiedergabeseite ist; und
als Reaktion auf die erste Auslöseoperation, Anzeigen (S102, S202) einer Zielvideoliste des aktuellen Videoautors in einem zweiten Anzeigebereich der Querformat-Wiedergabeseite, wobei die Zielvideoliste mindestens einen Videoeintrag von mindestens einem Zielvideo umfasst, das vom aktuellen Videoautor veröffentlicht worden ist;
wobei das Verfahren weiter umfasst: als Reaktion auf die erste Auslöseoperation Anzeigen (S202) einer Ansichtssteuerung auf der Querformat-Wiedergabeseite; und als Reaktion auf Empfangen einer zweiten Auslöseoperation, die auf die Ansichtssteuerung wirkt, Umschalten (S204) einer aktuell angezeigten Seite von der Querformat-Wiedergabeseite auf eine persönliche Homepage des aktuellen Videoautors, um über die persönliche Homepage vom aktuellen Videoautor veröffentlichte Videos anzuzeigen;
wobei das Verfahren vor Anzeigen (S102, S202) der Zielvideoliste des aktuellen Videoautors im zweiten Anzeigebereich der Querformat-Wiedergabeseite weiter umfasst: Erfassen mindestens eines vom aktuellen Videoautor veröffentlichten Querformatvideos als das mindestens eine Zielvideo, wobei eine Breite des Videoeinzelbildes des Querformatvideos größer ist als eine Höhe des Videoeinzelbildes des Querformatvideos.

2. Verfahren nach Anspruch 1, wobei das mindestens eine Zielvideo das erste Zielvideo und ein zweites Zielvideo umfasst, und das Verfahren nach Anzeigen (S102, S202) der Zielvideoliste des aktuellen Videoautors im zweiten Anzeigebereich der Querformat-Wiedergabeseite weiter umfasst:
als Reaktion auf eine Klickoperation, die auf einen Videoeintrag des zweiten Zielvideos wirkt, Abspielen (S203) des durch die Klickoperation ausgewählten zweiten Zielvideos auf der Querformat-Wiedergabeseite.

3. Verfahren nach Anspruch 2, wobei Abspielen (S203) des durch die Klickoperation ausgewählten zweiten Zielvideos auf der Querformat-Wiedergabeseite umfasst:
Aktualisieren eines ersten historischen Wiedergabeknotens des ersten Zielvideos auf einen Zeitknoten, auf dem das erste Zielvideo zum aktuellen Zeitpunkt abgespielt wird, und Bestimmen eines zweiten historischen Wiedergabeknotens des zweiten Zielvideos, das durch die Klickoperation ausgewählt worden ist; und
Fortsetzen des Abspielens auf der Querformat-Wiedergabeseite des zweiten durch die Klickoperation ausgewählten Zielvideos mit dem zweiten historischen Wiedergabeknoten als Wiedergabestartpunkt.

4. Verfahren nach Anspruch 2, weiter umfassend:
Beenden des Anzeigens der Zielvideoliste im zweiten Anzeigebereich.

5. Verfahren nach Anspruch 1, das nach Umschalten (S204) der aktuell angezeigten Seite von der Querformat-Wiedergabeseite auf die persönliche Homepage des aktuellen Videoautors, weiter umfasst:
als Reaktion auf Empfangen einer dritten Auslöseoperation, die auf eine Rücksprungsteuerung auf der persönlichen Homepage wirkt, Umschalten (S205) der aktuell angezeigten Seite von der persönlichen Homepage zurück zur Querformat-Wiedergabeseite und Abspielen des ersten Zielvideos und Anzeigen der Zielvideoliste auf der Querformat-Wiedergabeseite.

6. Verfahren nach einem der Ansprüche 1 bis 5, weiter umfassend:
als Reaktion auf Empfangen einer vierten Auslöseoperation, die auf eine Schließsteuerung der Querformat-Wiedergabeseite wirkt, Umschalten (S206) einer aktuell angezeigten Seite von der Querformat-Wiedergabeseite auf eine Hochformat-Wiedergabeseite; und
Abspielen (S207) des ersten Zielvideos auf der Hochformat-Wiedergabeseite; oder Abspielen auf der Hochformat-Wiedergabeseite eines zuletzt unter Verwendung der Hochformat-Wiedergabeseite abgespielten historischen Videos.

7. Elektronische Vorrichtung, umfassend:
mindestens einen Prozessor; und
einen Speicher, der konfiguriert ist, um mindestens ein Programm zu speichern,
wobei das mindestens eine Programm, wenn es von dem mindestens einen Prozessor ausgeführt wird, den mindestens einen Prozessor veranlasst, das Querformat-Interaktionsverfahren nach einem der Ansprüche 1 bis 6 durchzuführen.

8. Computerlesbares Speichermedium, das konfiguriert ist, um ein Computerprogramm zu speichern, das, wenn es von einem Prozessor ausgeführt wird, den Prozessor veranlasst, das Querformat-Interaktionsverfahren nach einem der Ansprüche 1 bis 6 durchzuführen.

## Revendications

1. Procédé d'interaction en mode paysage, comprenant :
la réception (S101, S201) d'une première opération de déclenchement agissant sur une première zone d'affichage d'une page de lecture en mode paysage, dans lequel la première zone d'affichage comprend une zone d'affichage d'informations d'auteur d'un auteur vidéo actuel, et l'auteur vidéo actuel est un éditeur d'une première vidéo cible dans la page de lecture en mode paysage ; et
en réponse à la première opération de déclenchement, l'affichage (S102, S202) d'une liste de vidéos cibles de l'auteur vidéo actuel dans une deuxième zone d'affichage de la page de lecture en mode paysage, dans lequel la liste de vidéos cibles comprend au moins un élément vidéo d'au moins une vidéo cible publiée par l'auteur vidéo actuel ;
dans lequel le procédé comprend en outre : en réponse à la première opération de déclenchement, l'affichage (S202) d'une commande de visualisation sur la page de lecture en mode paysage ; et en réponse à la réception d'une deuxième opération de déclenchement agissant sur la commande de visualisation, le basculement (S204) d'une page actuellement affichée de la page de lecture en mode paysage vers une page d'accueil personnelle de l'auteur vidéo actuel afin de présenter, via cette page d'accueil personnelle, les vidéos publiées par l'auteur vidéo actuel ;
dans lequel, avant l'affichage (S102, S202) de la liste de vidéos cibles de l'auteur vidéo actuel dans la deuxième zone d'affichage de la page de lecture en mode paysage, le procédé comprend en outre : l'acquisition d'au moins une vidéo paysage publiée par l'auteur vidéo actuel comme l'au moins une vidéo cible, dans lequel une largeur de trame vidéo de la vidéo paysage est supérieure à une hauteur de trame vidéo de la vidéo paysage.

2. Procédé selon la revendication 1, dans lequel l'au moins une vidéo cible comprend la première vidéo cible et une deuxième vidéo cible, et après l'affichage (S102, S202) de la liste de vidéos cibles de l'auteur vidéo actuel dans la deuxième zone d'affichage de la page de lecture en mode paysage, le procédé comprend en outre :
en réponse à la réception d'une opération de clic agissant sur un élément vidéo de la deuxième vidéo cible, la lecture (S203) de la deuxième vidéo cible sélectionnée par l'opération de clic sur la page de lecture en mode paysage.

3. Procédé selon la revendication 2, dans lequel la lecture (S203) de la deuxième vidéo cible sélectionnée par l'opération de clic sur la page de lecture en mode paysage comprend :
la mise à jour d'un premier nœud de lecture historique de la première vidéo cible vers un nœud temporel correspondant à la lecture de la première vidéo cible à l'instant actuel et la détermination d'un deuxième nœud de lecture historique de la deuxième vidéo cible sélectionnée par l'opération de clic ; et
la continuation de la lecture, dans la page de lecture en mode paysage, de la deuxième vidéo cible sélectionnée par l'opération de clic avec le deuxième nœud de lecture historique comme point de départ de lecture.

4. Procédé selon la revendication 2, comprenant en outre :
l'arrêt de l'affichage de la liste des vidéos cibles dans la deuxième zone d'affichage.

5. Procédé selon la revendication 1, après avoir basculé (S204) de la page actuellement affichée de la page de lecture en mode paysage à la page d'accueil personnelle de l'auteur vidéo actuel, comprenant en outre :
en réponse à la réception d'une troisième opération de déclenchement agissant sur une commande de retour dans la page d'accueil personnelle, le basculement (S205) de la page actuellement affichée de la page d'accueil personnelle vers la page de lecture en mode paysage et la lecture de la première vidéo cible et l'affichage de la liste de vidéos cibles dans la page de lecture en mode paysage.

6. Procédé selon l'une quelconque des revendications 1 à 5, comprenant en outre :
en réponse à la réception d'une quatrième opération de déclenchement agissant sur une commande de fermeture dans la page de lecture en mode paysage, le basculement (S206) d'une page actuellement affichée de la page de lecture en mode paysage à une page de lecture en mode portrait ; et
la lecture (S207) de la première vidéo cible dans la page de lecture en mode portrait ; ou la lecture, dans la page de lecture en mode portrait, d'une dernière vidéo historique lue à l'aide de la page de lecture en mode portrait.

7. Dispositif électronique comprenant :
au moins un processeur ; et
une mémoire, qui est configurée pour stocker au moins un programme ;
dans lequel l'au moins un programme, lorsqu'il est exécuté par l'au moins un processeur, amène l'au moins un processeur à exécuter le procédé d'interaction en mode paysage selon l'une quelconque des revendications 1 à 6.

8. Support de stockage lisible par ordinateur, qui est configuré pour stocker un programme informatique qui, lorsqu'il est exécuté par un processeur, amène le processeur à réaliser le procédé d'interaction en mode paysage selon l'une quelconque des revendications 1 à 6.
